(19) Europäisches Patentamt
European Patent Office
Office européen des brevets

(11) EP 0 499 051 B1

(12) **EUROPÄISCHE PATENTSCHRIFT**

(45) Veröffentlichungstag und Bekanntmachung des Hinweises auf die Patenterteilung:
**11.12.1996 Patentblatt 1996/50**

(51) Int Cl.[6]: **C08G 77/46**, C09D 183/12

(21) Anmeldenummer: **92100898.3**

(22) Anmeldetag: **21.01.1992**

(54) **Organopolysiloxane mit an einer gemeinsamen Spacergruppe gebundenen Polyether- und Ester-Gruppen**

Organopolysiloxanes comprising polyether and ester groups attached to the same spacer group

Organopolysiloxanes comprenant des groupes polyéther et ester rattachés au même groupe de liaison

(84) Benannte Vertragsstaaten:
**BE DE FR GB IT NL**

(30) Priorität: **13.02.1991 DE 4104270**

(43) Veröffentlichungstag der Anmeldung:
**19.08.1992 Patentblatt 1992/34**

(73) Patentinhaber: **Th. Goldschmidt AG**
**D-45127 Essen (DE)**

(72) Erfinder:
- **Schaefer, Dietmar, Dr.**
  **W-4320 Hattingen 16 (DE)**
- **Weier, Andreas, Dr.**
  **W-4300 Essen 1 (DE)**
- **Wewers, Dietmar, Dr.**
  **W-4250 Bottrop (DE)**

(56) Entgegenhaltungen:
**EP-A- 0 002 519** **EP-A- 0 165 059**
**EP-A- 0 372 584** **DE-C- 3 820 294**

- **PATENT ABSTRACTS OF JAPAN vol. 11, no. 96 (C-412)26. März 1987 ; & JP-A-61 247 737**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 499 051 B1

Printed by Jouve, 75001 PARIS (FR)

**Beschreibung**

Die Erfindung betrifft Organopolysiloxane mit an einer gemeinsamen Spacergruppe gebundenen Polyether- und Ester-Gruppen, wobei die Spacergruppe über eine SiC-Bindung mit dem Siloxangerüst verbunden ist.

Es ist bekannt, Polyether-Gruppen enthaltende Polysiloxane, bei denen die Polyether-Gruppen über eine SiC-Bindung mit dem Polysiloxangerüst verbunden sind, durch Anlagerung von Allylpolyethern an Wasserstoffsiloxane herzustellen. Es gibt hierzu eine umfangreiche Patentliteratur, wobei hier nur stellvertretend auf die DE-PS 31 33 869 hingewiesen wird.

Es hat sich jedoch als störend erwiesen, daß unter den Bedingungen der Hydrosilylierung in Konkurrenz zur Additionsreaktion eine Umlagerung der Allylpolyether zu den entsprechenden Propenylpolyethern erfolgt:

$$CH_2=CH-CH_2-O-[C_nH_{2n}O-]m \rightarrow CH_3-CH=CH-O-[C_nH_{2n}O-]_m$$

Diese Propenylether entziehen sich der Hydrosilylierung und verbleiben, da eine wirtschaftliche Abtrennung, z.B. durch Destillation, aus dem erhaltenen Polyethersiloxan nicht möglich ist, in erheblichen Mengen im Hydrosilylierungsprodukt. Die Propenylether können bei der Verwendung der Polyethersiloxane zu Störungen und abträglichen Effekten führen. Es ist aber noch kein Verfahren bekannt, das diese Umlagerungsreaktion verhindern oder wenigstens weitgehend unterdrücken könnte.

Aus der DE-PS 38 10 140 ist die Verwendung von Polysiloxanen mit über SiC-Gruppen gebundenen (Meth)acrylsäureestergruppen als strahlenhärtende abhäsive Beschichtungsmittel bekannt.

Diese Verbindungen sind erhältlich durch Umsetzung von Polysiloxanen der allgemeinen durchschnittlichen Formel

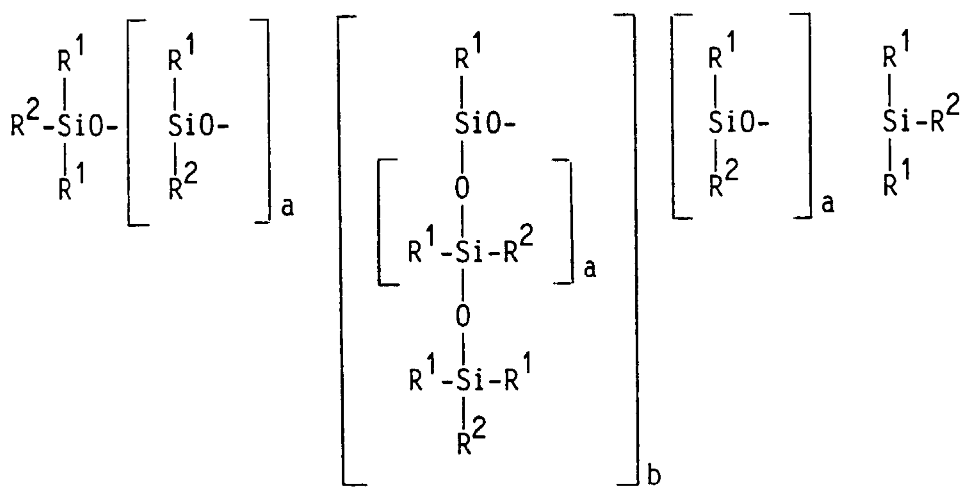

worin

die Reste $R^1$ gleich oder verschieden sind und jeweils niedere Alkylreste mit 1 bis 4 Kohlenstoffatomen oder Phenylreste bedeuten,

die Reste $R^2$ zu einem Teil die Bedeutung der Reste $R^1$ haben können und die übrigen Reste $R^2$ zu 70 bis 100 % hydroxyfunktionelle Reste der Formel

$$-CH_2(CR^3_2n-(OCH_2CHR^4)_m-OH, -CH=CH-CR^3_2-OH$$

und/oder Reste der Formel

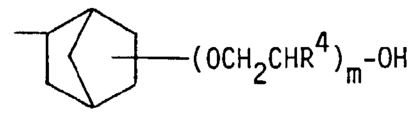

bedeuten,
wobei

die Reste $R^3$ gleich oder verschieden sind und jeweils einen H- oder Alkylrest mit 1 bis 4 Kohlenstoffatomen bedeuten,

die Reste $R^4$ gleich oder verschieden sind und jeweils einen H- oder Alkylrest mit 1 bis 10 Kohlenstoffatomen bedeuten, und die Indices n = 0 bis 10 und m = 0 bis 40 sind und 30 bis 0 % gegebenenfalls substituierte Alkylreste mit 2 bis 20 Kohlenstoffatomen und/oder Wasserstoffreste sind,

mit der Maßgabe, daß im durchschnittlichen Molekül mindestens 1,8 hydroxyfunktionelle $R^2$-Reste enthalten sind,

a einen Wert von 1 bis 1000 und
b einen Wert von 0 bis 10 hat,

mit, bezogen auf Hydroxylgruppen, 0,4- bis 0,9molaren Mengen (Meth)acrylsäure und bis zu 0,6molaren Mengen einer Monocarbonsäure, welche frei von zur Polymerisation befähigten Doppelbindungen ist, wobei die Summe der molaren Mengen Säuren 1,0 nicht überschreiten darf, unter üblichen Veresterungsbedingungen.

Auch bei dieser Verfahrensweise besteht die Gefahr der Doppelbindungsisomerie der α-En, ω-ol-Komponente im Verlauf der Platin-katalysierten Anlagerung an das Wasserstoffsiloxan. Während z.B. der so entstandene Propenylalkohol, der sich zum Propionaldehyd umlagert, aus dem Anlagerungsprodukt abdestilliert werden kann, verbleibt der Propenylpolyether im Produkt. Da der Propenylpolyether nicht siliconmodifiziert ist, kann er die Abhäsivität des Verfahrensproduktes beeinträchtigen.

Zum Stand der Technik für Polysiloxane, die an einer SiC-gebundenen Spacergruppe Ester-Gruppen aufweisen, kann als ein Beispiel die DE-PS 38 20 294 genannt werden. Sie betrifft Polysiloxane mit über SiC-Gruppen gebundenen (Meth)acrylsäureestergruppen, die erhältlich sind durch Umsetzung von Polysiloxanen der allgemeinen durchschnittlichen Formel

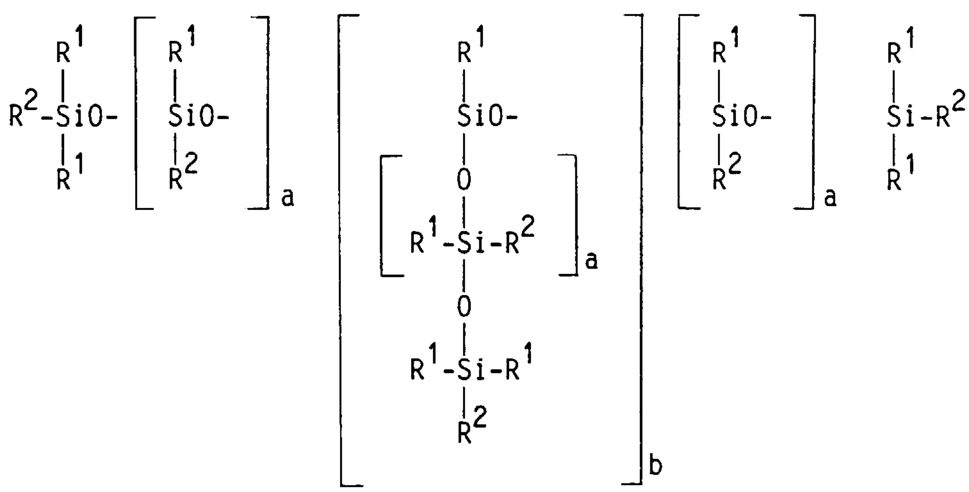

wobei

die Reste $R^1$ gleich oder verschieden sind und jeweils niedere Alkylreste mit 1 bis 4 Kohlenstoffatomen oder Phenylreste bedeuten,

die Reste $R^2$ zu einem Teil die Bedeutung der Reste $R^1$ haben können und die übrigen Reste $R^2$ zu

70 bis 100 % übliche epoxyfunktionelle Reste und zu
30 bis 0 % Alkylreste mit 2 bis 10 Kohlenstoffatomen oder Wasserstoffreste sind,

mit der Maßgabe, daß im durchschnittlichen Molekül mindestens 1,8 Epoxygruppen enthalten sind,

a einen Wert von 1 bis 1000 und
b einen Wert von 0 bis 10 hat,

mit, bezogen auf Epoxygruppen, 0,4- bis 0,9molaren Mengen (Meth)acrylsäure und Umsetzung der verbleibenden Epoxidgruppen mit einer Monocarbonsäure mit 2 bis 12 Kohlenstoffatomen, welche frei von zur Polymerisation befähigten Doppelbindungen ist.

Die vorliegende Erfindung befaßt sich mit dem technischen Problem, neuartige Organopolysiloxane mit an einer gemeinsamen Spacergruppe gebundenen Polyether- und Ester-Gruppen, wobei die Spacergruppe über eine SiC-Bindung mit dem Siloxangerüst verbunden ist, bereitzustellen, welche frei von Propenylethern und in wirtschaftlicher Weise herstellbar sind.

Gegenstand der Erfindung sind deshalb neuartige Organopolysiloxane mit an einer gemeinsamen Spacergruppe gebundenen Polyether- und Ester-Gruppen, wobei die Spacergruppe über eine SiC-Bindung mit dem Siloxangerüst verbunden ist, der allgemeinen Formel

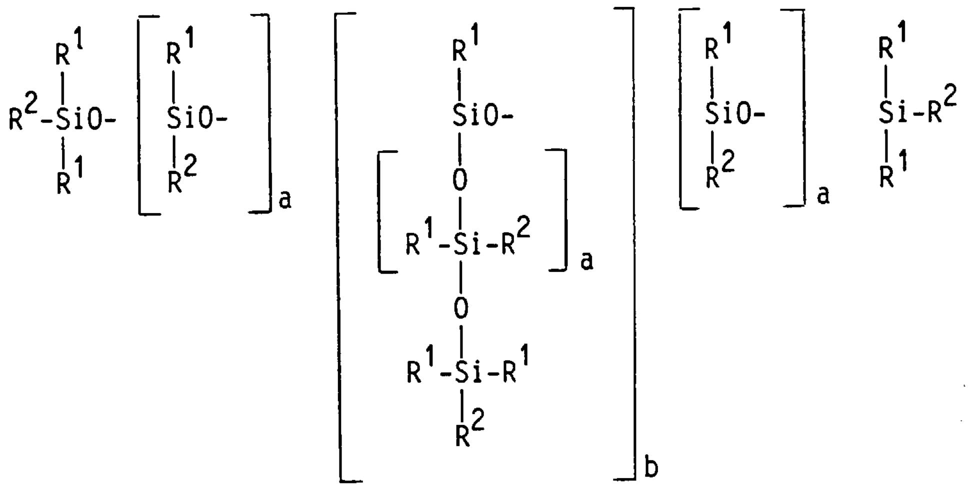

wobei

die Reste $R^1$ gleich oder verschieden sind und jeweils niedere Alkylreste mit 1 bis 4 Kohlenstoffatomen aufweisen oder Phenylreste bedeuten, jedoch mindestens 90 % der Reste $R^1$ Methylreste sind,
die Reste $R^2$ zu einem Teil die Bedeutung der Reste $R^1$ haben können und die übrigen Reste $R^2$ .

zu 70 bis 100 % Reste der Formel $R^3$-$R^4$ sind, in der

$R^3$ ein zweiwertiger Kohlenwasserstoffrest, dessen Kohlenstoffkette durch ein Sauerstoffatom unterbrochen sein und/oder eine Carbonylgruppe aufweisen kann, und
$R^4$ der Rest

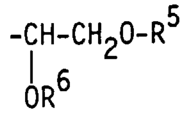 oder 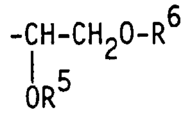

oder der Rest

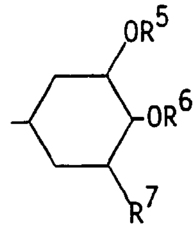

oder

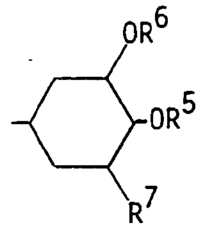

oder der Rest

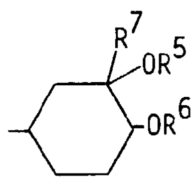

oder

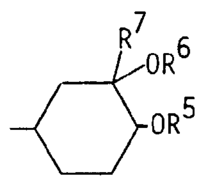

oder der Rest

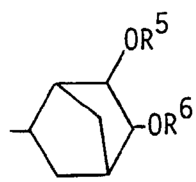

oder

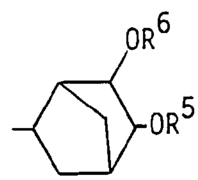

ist,

in dem $R^5$ der Acylrest einer Monocarbonsäure mit 1 bis 20 Kohlenstoffatomen,
$R^6$ ein Polyetherrest und
$R^7$ ein Wasserstoff- oder Methylrest ist, und

zu 0 bis 30 % Alkylreste mit 2 bis 30 Kohlenstoffatomen und/oder Wasserstoffreste sind,

a einen Wert von 1 bis 1000 und
b einen Wert von 0 bis 10 hat,

mit der Maßgabe, daß im durchschnittlichen Molekül mindestens 1 Rest $R^2$ ein Rest der Formel $R^3$-$R^4$ ist.

Die Reste $R^1$ sind jeweils niedere Alkylreste mit 1 bis 4 Kohlenstoffatomen oder Phenylreste. Die Alkylreste können geradkettig oder, bei mehr als 2 Kohlenstoffatomen im Rest, auch verzweigt sein. Bevorzugt sind die geradkettigen Alkylreste, insbesondere der Methylrest. Es muß die Bedingung erfüllt sein, daß mindestens 90 % der Reste $R^1$ Methylreste sind.

Die Reste $R^2$ können zu einem Teil mit den Resten $R^1$ identisch sein. Es muß jedoch die Bedingung erfüllt sein, daß im durchschnittlichen Molekül des Organopolysiloxans mindestens 1 Rest $R^2$ die Bedeutung eines Restes der Formel $R^3$-$R^4$ hat.

$R^3$ ist ein zweiwertiger Kohlenwasserstoffrest, dessen Kohlenstoffkette durch ein Sauerstoffatom unterbrochen sein kann und/oder eine Carbonylgruppe aufweist. Vorzugsweise sind die Reste $R^3$ aus der Gruppe

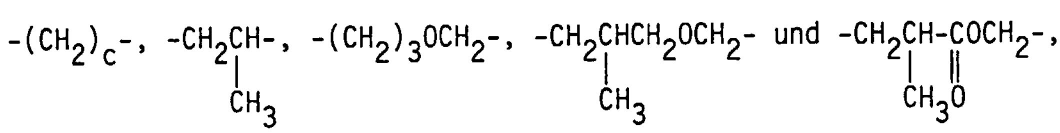

wobei c eine Zahl von 1 bis 6 ist, ausgewählt.

Weitere Beispiele von Resten $R^3$ sind

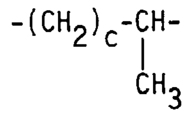 und 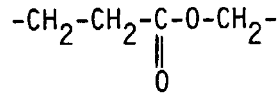 .

Die Reste $R^4$ sind aus Resten der folgenden Gruppe ausgewählt:

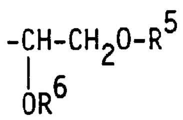 ; 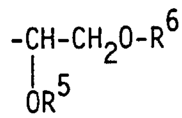

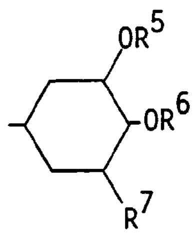 ; 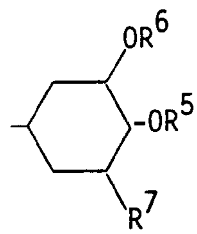

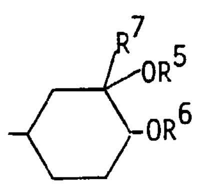 oder 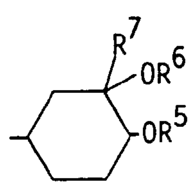

oder

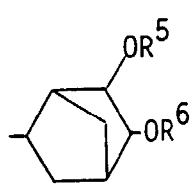 oder 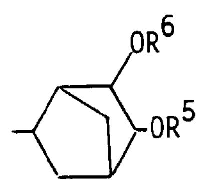

$R^5$ ist dabei der Acylrest einer Monocarbonsäure mit 1 bis 20 Kohlenstoffatomen. Die Monocarbonsäuren sind vorzugsweise aliphatische, gesättigte oder ungesättigte Säuren. Beispiele solcher Monocarbonsäuren sind die Essigsäure, Propionsäure, Ethylhexansäure, Laurinsäure, Stearinsäure, Acrylsäure, Methacrylsäure und Ölsäure. Ist $R^5$ der Acylrest der Acryl- oder Methacrylsäure, erhält man Produkte, welche der Härtung durch Einwirkung energiereicher Strahlung zugänglich sind.

$R^6$ ist ein Polyetherrest. Vorzugsweise entspricht er der allgemeinen Formel $-(C_nH_{2n}O-)_mH$, wobei n einen durchschnittlichen Wert von 2,0 bis 4,0 und m einen durchschnittlichen Wert von 2 bis 100 hat. Der Polyetherrest kann Oxyethylen-, Oxypropylen- und/oder Oxybutylen-Einheiten aufweisen, die blockweise oder in statistischer Verteilung angeordnet sein können. Vorzugsweise hat n einen durchschnittlichen Wert von 2,0 bis 3,0. Der Polyetherrest kann jedoch auch aus Einheiten bestehen oder solche Einheiten enthalten, die durch Anlagerung von Epoxiden, wie z.B.

Allylglycidether, 9-Epoxydecen oder Vinylcyclohexenoxid, erhalten werden.

$R^7$ ist ein Wasserstoff- oder Methylrest, wobei der Wasserstoffrest bevorzugt ist.

Der Rest $R^2$ kann schließlich auch ein Alkylrest mit 2 bis 30 Kohlenstoffatomen und/oder ein Wasserstoffrest sein.

Das Verhältnis der Reste $R^3$-$R^4$ zu den Alkylresten mit 2 bis 12 Kohlenstoffatomen bzw. zu den Wasserstoffresten ist durch das folgende Verhältnis gegeben:

70 bis 100 % der Reste $R^2$, die nicht die Bedeutung des Restes $R^1$ haben, sind Reste $R^3$-$R^4$,
0 bis 30 % der Reste $R^2$, die nicht die Bedeutung des Restes $R^1$ haben, sind Alkylreste mit 2 bis 12 Kohlenstoffatomen oder Wasserstoffreste.

Die Untergrenze für den Gehalt an Resten $R^3$-$R^4$ ist dadurch gegeben, daß im durchschnittlichen Molekül mindestens 1 Rest $R^2$ ein $R^3$-$R^4$-Rest ist. Die Obergrenze für den Gehalt an Resten $R^3$-$R^4$ liegt darin, daß alle Reste $R^2$ $R^3$-$R^4$-Reste sind.

Herstellbedingt können die erfindungsgemäßen Verbindungen in untergeordnetem Maße noch Epoxidgruppen enthalten, da diese die Vorläufer der Gruppe $R^4$ sind:

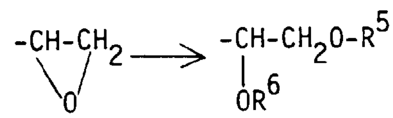

Die Anzahl an Epoxidgruppen im durchschnittlichen Molekül sollte aber kleiner als 1 sein, um störende Nebenreaktionen, wie Vergelungen, auszuschließen.

Durch den Index a wird die Anzahl der difunktionellen Siloxyeinheiten festgelegt. Bei linearen Molekülen ergibt sich die Anzahl der difunktionellen Siloxyeinheiten zu 2a. Bei verzweigten Siloxanen beträgt die Zahl der difunktionellen Siloxyeinheiten 2a + b.a . Dabei hat a einen Wert von 1 bis 1000, vorzugsweise einen Wert von 3 bis 200.

Der Index b gibt die Anzahl der trifunktionellen Siloxyeinheiten wieder. Der Wert von b ist im durchschnittlichen Molekül 0 bis 10, vorzugsweise 0 bis 2.

Ein weiterer Gegenstand der Erfindung besteht in dem Verfahren zur Herstellung der Organopolysiloxane und ist dadurch gekennzeichnet, daß man an Organopolysiloxane der allgemeinen Formel

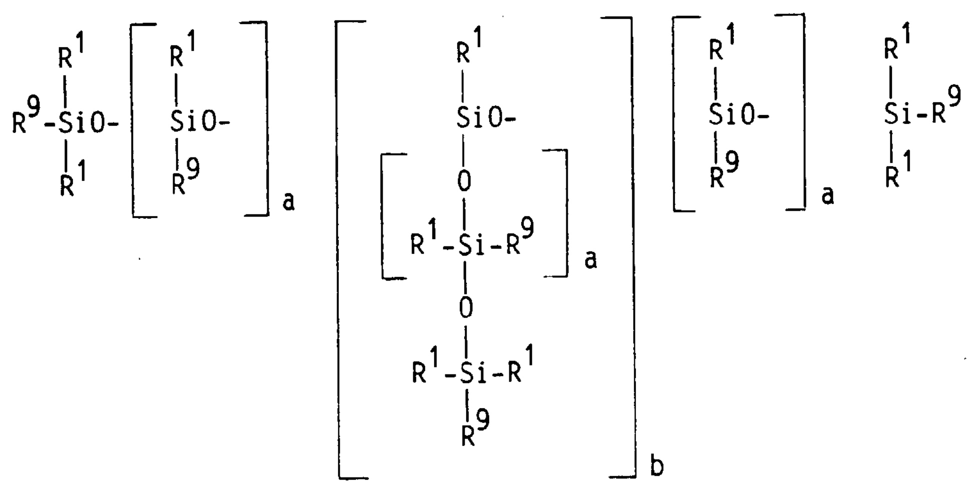

wobei

die Reste $R^1$ und die Indices a und b die bereits angegebene Bedeutung haben und

die Reste $R^9$ zu einem Teil die Bedeutung der Reste $R^1$ haben können und die übrigen Reste $R^9$

zu 70 bis 100 % Reste der Formel $R^3$-$R^{10}$ sind, in der

$R^3$ die bereits angegebene Bedeutung hat, und
$R^{10}$ der Rest

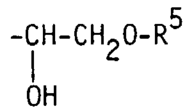 oder 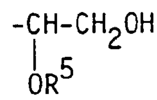

oder der Rest

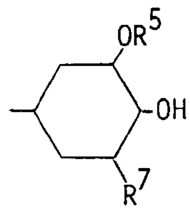 oder 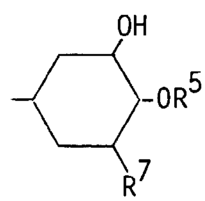

oder der Rest

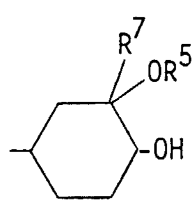 oder 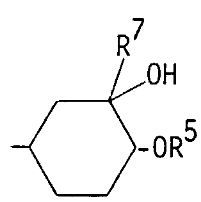

oder der Rest

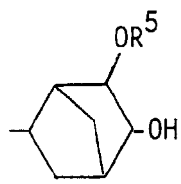 oder 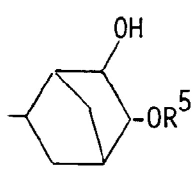

ist,
in dem $R^5$ und $R^7$ die bereits angegebene Bedeutung haben, und

zu 0 bis 30 % Alkylreste mit 2 bis 30 Kohlenstoffatomen und/oder Wasserstoffreste sind,

mit der Maßgabe, daß im durchschnittlichen Molekül mindestens 1 Rest $R^2$ ein Rest der Formel $R^3$-$R^{10}$ ist, bezogen auf Reste $R^3$-$R^{10}$, 2 bis 100 Mol Alkylenoxide mit 2 bis 4 Kohlenstoffatomen einzeln oder im Gemisch in Gegenwart von an sich bekannten sauren Katalysatoren oder Komplexkatalysatoren, die die Anlagerung von Alkylenoxid an Hydroxylgruppen beschleunigen, gegebenenfalls in Gegenwart eines Lösungsmittels, anlagert.

Im Falle der Verwendung verschiedener Alkylenoxide erfolgt die Anlagerung entweder nacheinander, so daß Blöcke der einzelnen Oxyalkylen-Einheiten entstehen, oder in Form eines Alkylenoxidgemisches, wobei Produkte mit statistischer Verteilung der verschiedenen Oxyalkylen-Einheiten erhalten werden. Vorzugsweise werden als Alkylenoxide Ethylenoxid und/oder Propylenoxid eingesetzt.

Als Katalysator für die Anlagerung der Alkylenoxide werden saure Katalysatoren oder Komplexkatalysatoren verwendet. Beispiele für geeignete saure Katalysatoren sind $BF_3$, $AlCl_3$ oder $SnCl_4$.

Beispiele für Komplexkatalysatoren sind $Zn_3[Co(CN)_6]_2$, $Pt\text{-}Me_2$(1,10-phenanthroline) und Zink-N-methyltetraphenylporphyrinisopropanolat.

Ein besonders bevorzugter Katalysator ist $BF_3$.

Im Falle der Verwendung von $BF_3$ erfolgt die Anlagerung der Alkylenoxide bei Temperaturen von $\leqq$ 60°C, vorzugsweise bei 0 bis 50°C, insbesondere bei 20 bis 40°C.

Bei Verwendung der Komplexkatalysatoren können im allgemeinen höhere Temperaturen, insbesondere Temperaturen von 80 bis 160°C, angewendet werden.

Nach dem Stand der Technik werden Siloxane mit Polyoxyalkylenblöcken dadurch hergestellt, daß man das Polysiloxan mit Polyoxyalkylenmonoolen oder seinen reaktiven Derivaten umsetzt. Es war in hohem Maße überraschend, daß bei dem erfindungsgemäßen Verfahren in Gegenwart der vorgenannten Katalysatoren Nebenreaktionen, insbesondere Abbau- und/oder Äquilibrierungsreaktionen am Gerüst des Siloxans in störendem Ausmaß nicht beobachtet werden.

Ein weiterer Gegenstand des Verfahrens besteht in der Verwendung der Organopolysiloxane als Additive für Kunststoffe, Lacke und Bindemittel. Sie können Kunststoffen, wie Polyurethanacrylaten, Polyetheracrylaten, Polystyrolen, zugesetzt werden und bewirken dabei ebenso wie bei einem Zusatz zu Lacken und Bindemitteln niedrige Gleitwerte, höhere Kratzfestigkeit und eine Erhöhung der Abhäsivität.

Ist in den erfindungsgemäßen Verbindungen $R^5$ der Acylrest der Acryl- oder oder Methacrylsäure, können die Verbindungen als strahlenhärtende Lacke oder Beschichtungsmassen oder als Additive in solchen Systemen eingesetzt werden. Sie können in üblicher Weise mit Härtungsinitiatoren, Füllstoffen, Pigmenten und anderen üblichen Zusatzstoffen compoundiert werden. Die Verbindungen härten unter Einfluß energiereicher Strahlung, wie UV- oder Eletronenstrahlen, innerhalb kürzester Zeit zu mechanisch und chemisch widerstandsfähigen Schichten aus, die bei geeigneter Zusammensetzung der erfindungsgemäßen Verbindungen vorbestimmbare abhäsive Eigenschaften aufweisen können.

Die Herstellung erfindungsgemäßer Verbindungen und deren anwendungstechnische Eigenschaften werden in den folgenden Beispielen noch näher erläutert.

Beispiel 1

Zu einer Mischung von 124,6 g (0,1 Mol) eines Hydroxygruppen enthaltenden Siloxans der durchschnittlichen Formel I

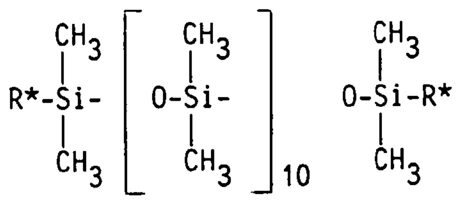

Formel I

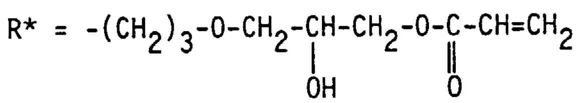

oder

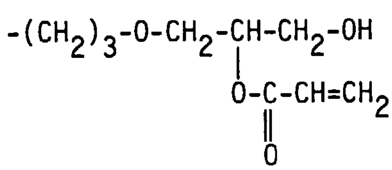

und 20 ml Toluol werden 0,5 ml (1 Mol-%, bezogen auf OH-Gruppen) Bortrifluorid als 48 %ige Lösung in Diethylether zugegeben. Dann werden 46,4 g (0,8 Mol) Propylenoxid langsam zugetropft, so daß die Temperatur der Reaktionsmischung 60°C nicht überschreitet. Nach Beendigung der Zugabe wird noch 1/2 Stunde gerührt, dann mit Wasser und Natriumhydrogencarbonat neutralisiert. Filtration und Abziehen der flüchtigen Reaktionsprodukte bei 120°C und 13,3 Pa ergibt 159 g (93 % der Theorie) eines mittelviskosen Öls der Formel I (entsprechend der spektroskopischen Daten) mit

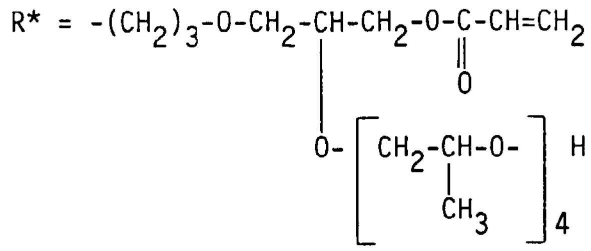

oder

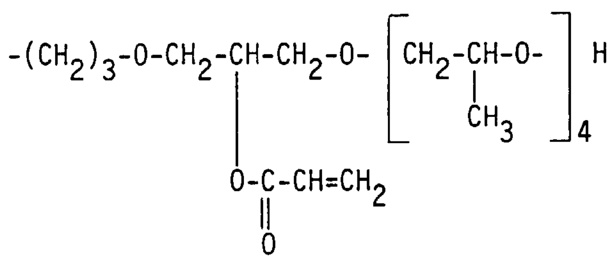

Beispiel 2

Zu einer Mischung von 126 g (0,1 Mol) eines Hydroxygruppen enthaltenden Siloxans der durchschnittlichen Formel I mit

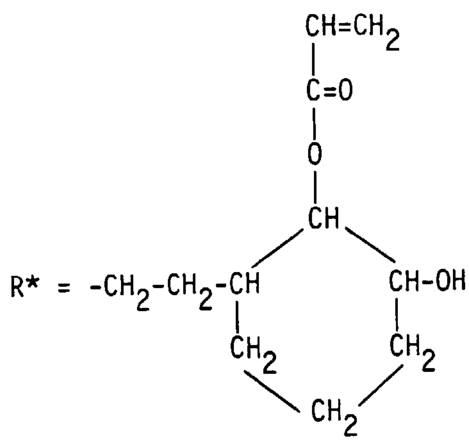

oder

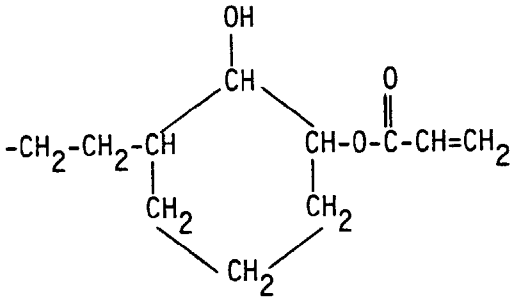

und 20 ml Toluol werden 0,5 ml (1 Mol-%, bezogen auf OH-Gruppen) Bortrifluorid als 48 %ige Lösung in Diethylether zugegeben. Dann werden 46,4 g (0,8 Mol) Propylenoxid langsam zugetropft, so daß die Temperatur der Reaktionsmischung 60°C nicht überschreitet. Nach Beendigung der Zugabe wird noch 1/2 Stunde gerührt, dann mit Wasser und Natriumhydrogencarbonat neutralisiert. Filtration und Abziehen der flüchtigen Reaktionsprodukte bei 120°C und 13,3 Pa ergibt 157 g (91 % der Theorie) eines mittelsviskosen Öls der Formel I (entsprechend der spektroskopischen Daten) mit

R* =

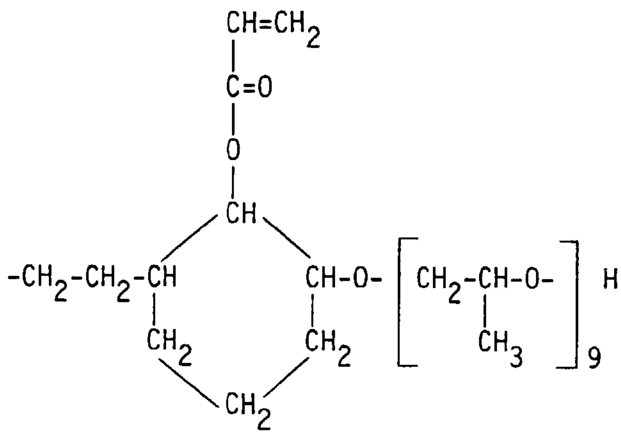

oder

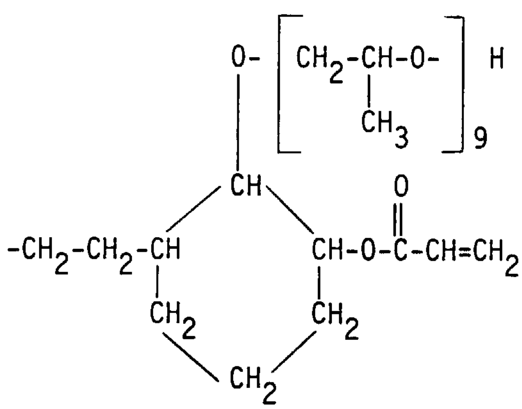

Beispiel 3

Zu einer Mischung von 223,1 g (0,05 Mol) eines Hydroxygruppen enthaltenden Siloxans der durchschnittlichen

Formel II

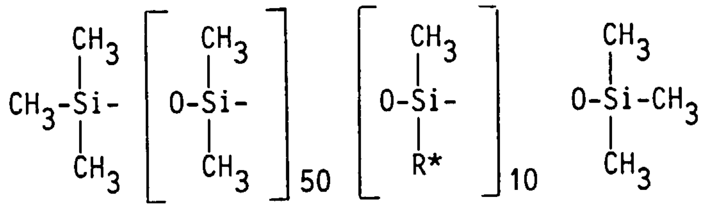

Formel II

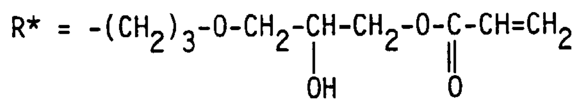

oder

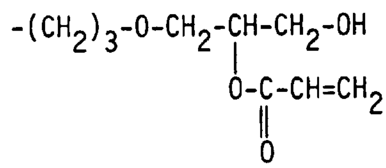

und 50 ml Toluol werden 2,5 ml (1 Mol-%, bezogen auf OH-Gruppen) Bortrifluorid als 48 %ige Lösung in Diethylether zugegeben. Dann werden in einem Druckgefäß 264 g (6 Mol) Ethylenoxid langsam zugegeben, so daß die Temperatur der Reaktionsmischung 40°C nicht überschreitet. Nach Beendigung der Zugabe wird noch 1/2 Stunde gerührt, dann mit Wasser und Natriumhydrogencarbonat neutralisiert. Filtration und Abziehen der flüchtigen Reaktionsprodukte bei 120°C und 13,3 Pa ergibt 438 g (90 % der Theorie) eines mittelviskosen Öls der Formel I (entsprechend der spektroskopischen Daten) mit

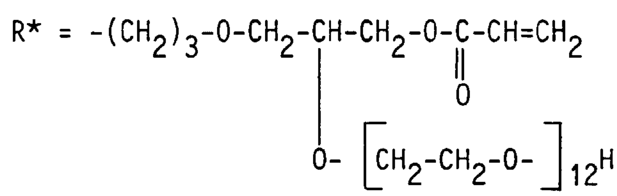

oder

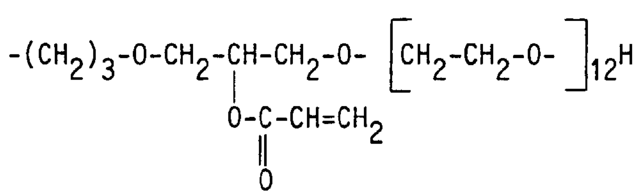

Beispiel 4

Zu einer Mischung von 124,6 g (0,1 Mol) eines Hydroxygruppen enthaltenden Siloxans der durchschnittlichen Formel I

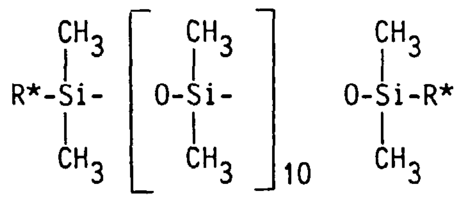

Formel I

R* = 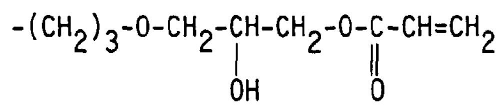

oder

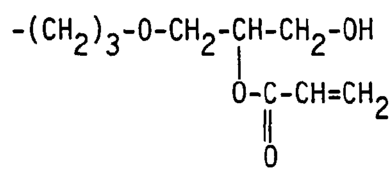

und 20 ml Toluol werden 0,5 ml (1 Mol-%, bezogen auf OH-Gruppen) Bortrifluorid als 48 %ige Lösung in Diethylether zugegeben. Dann werden in einem Druckgefäß 105,6 g (2,4 Mol) Ethylenoxid langsam zugegeben, so daß die Temperatur der Reaktionsmischung 60°C nicht überschreitet. Nach Beendigung der Zugabe wird noch 1/2 Stunde gerührt, dann mit Wasser und Natriumhydrogencarbonat neutralisiert. Filtration und Abziehen der flüchtigen Reaktionsprodukte bei 120°C und 13,3 Pa ergibt 218 g (95 % der Theorie) eines mittelviskosen Öls der Formel I (entsprechend der spektroskopischen Daten) mit

R* = 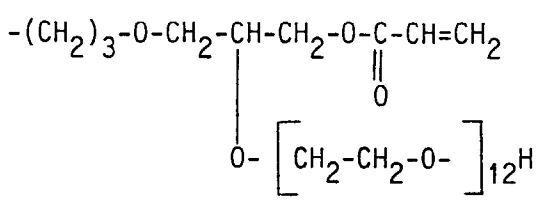

oder

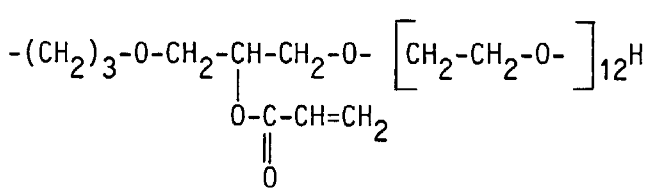

Beispiel 5

Zu einer Mischung von 124,6 g (0,1 Mol) eines Hydroxygruppen enthaltenden Siloxans der durchschnittlichen Formel I

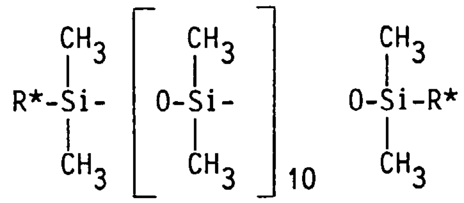

Formel I

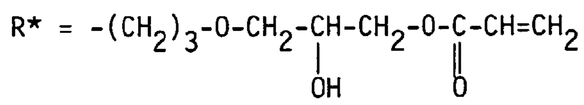

oder

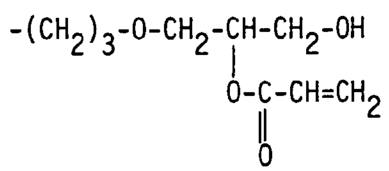

und 20 ml Toluol werden 0,5 ml (1 Mol-%, bezogen auf OH-Gruppen) Bortrifluorid als 48 %ige Lösung in Diethylether zugegeben. Dann werden in einem Druckgefäß 35,2 g (0,8 Mol) Ethylenoxid und 46,4 g (0,8 Mol) Propylenoxid langsam zugegeben, so daß die Temperatur der Reaktionsmischung 60°C nicht überschreitet. Nach Beendigung der Zugabe wird noch 1/2 Stunde gerührt, dann mit Wasser und Natriumhydrogencarbonat neutralisiert. Filtration und Abziehen der flüchtigen Reaktionsprodukte bei 120°C und 13,3 Pa ergibt 177 g (86 % der Theorie) eines mittelviskosen Öls der Formel I (entsprechend der spektroskopischen Daten) mit

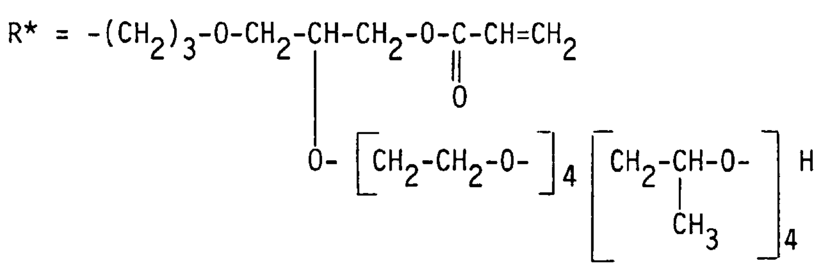

oder

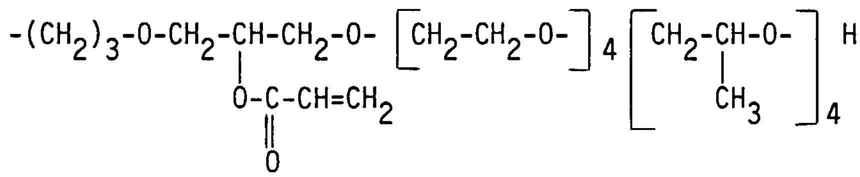

Beispiel 6

Zu einer Mischung von 55,9 g (0,01 Mol) eines Hydroxygruppen enthaltenden Siloxans der durchschnittlichen Formel III

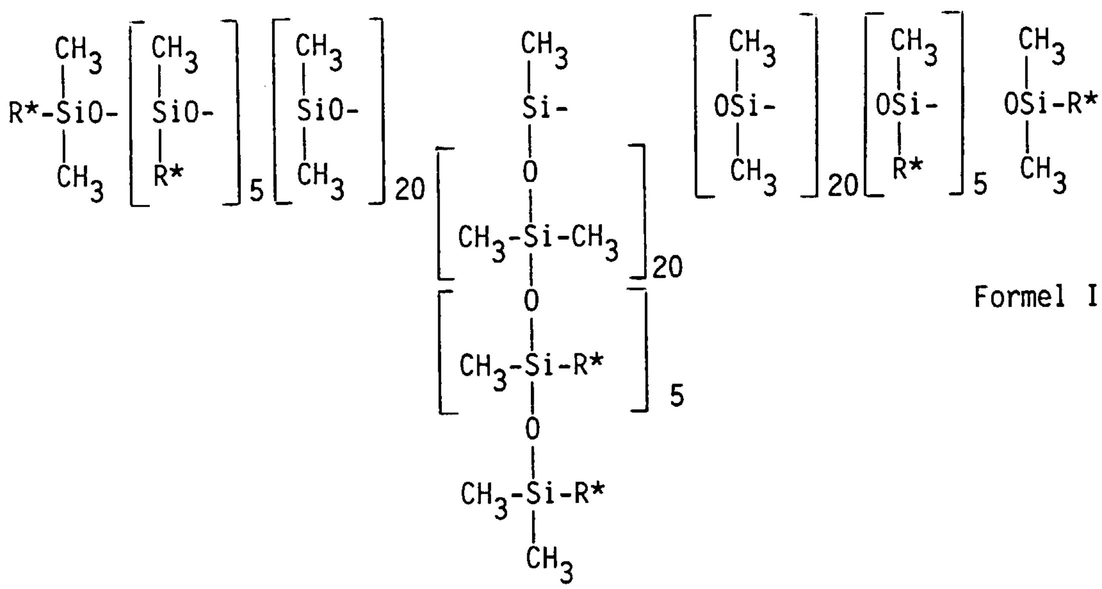

Formel III

R* = 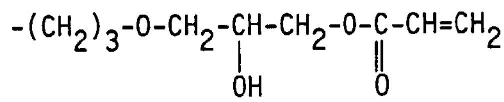

oder

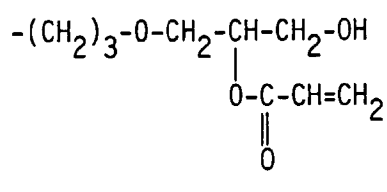

und 20 ml Toluol werden 0,5 ml (1 Mol-%, bezogen auf OH-Gruppen) Bortrifluorid als 48 %ige Lösung in Diethylether zugegeben. Dann werden 41,7 g (0,72 Mol) Propylenoxid langsam zugetropft, so daß die Temperatur der Reaktionsmischung 60°C nicht überschreitet. Nach Beendigung der Zugabe wird noch 1/2 Stunde gerührt, dann mit Wasser und Natriumhydrogencarbonat neutralisiert. Filtration und Abziehen der flüchtigen Reaktionsprodukte bei 120°C und 13,3 Pa ergibt 89 g (91 % der Theorie) eines mittelviskosen Öls der Formel III (entsprechend der spektroskopischen Daten) mit

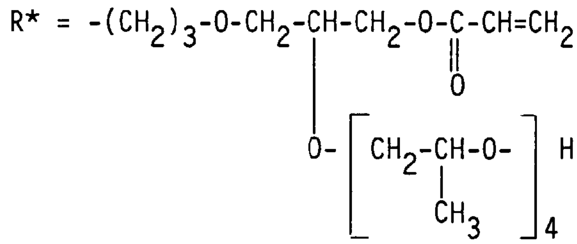

oder

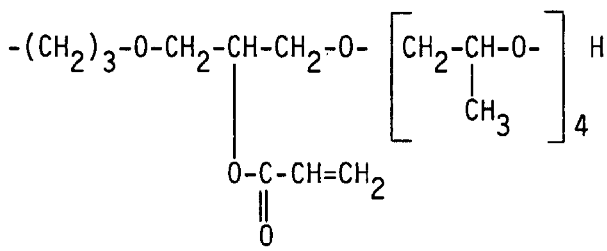

Beispiel 7

Zu einer Mischung von 130,6 g (0,1 Mol) eines Hydroxygruppen enthaltenden Siloxanes der durchschnittlichen Formel I

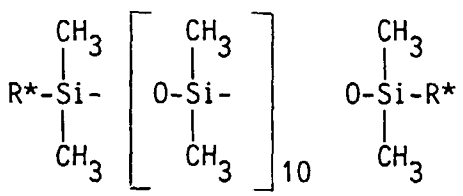

Formel I

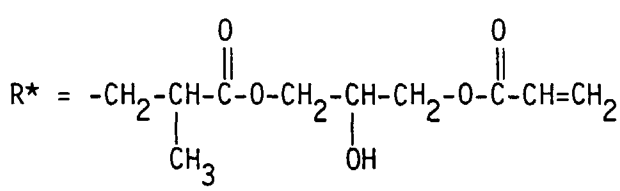

und 20 ml Toluol werden 0,5 ml (1 Mol-%, bezogen auf OH-Gruppen) Bortrifluorid als 48 %ige Lösung in Diethylether zugegeben. Dann werden 114 g (1,0 Mol) Allylglycidether unter Kühlung langsam zugetropft, so daß die Temperatur der Reaktionsmischung 60°C nicht überschreitet. Nach Beendigung der Zugabe wird noch 1/2 Stunde gerührt, dann mit Wasser und Natriumhydrogencarbonat neutralisiert. Filtration und Abziehen der flüchtigen Reaktionsprodukte bei 120°C/0,1 Torr liefert 221 g (91 % d. Th.) eines mittelviskosen Öls, bei dem es sich laut spektroskopischer Daten um ein Silikonpolyetheracrylat der durchschnittlichen Formel

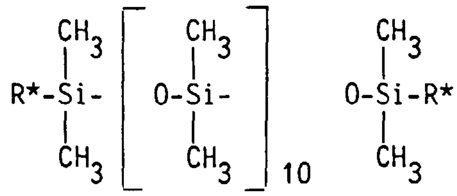

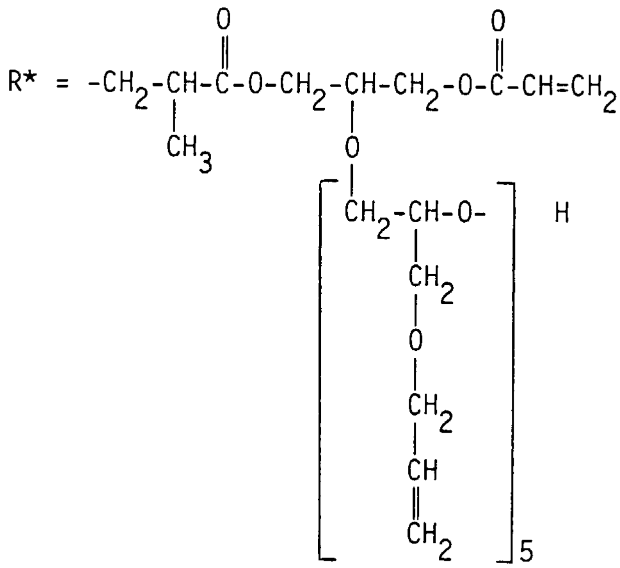

handelt.

Anwendungstechnische Prüfungen

Zur Prüfung der anwendungstechnischen Eigenschaften werden die erhaltenen Siliconpolyetheracrylate einem UV-härtenden Lacksystem in einer Menge von 1 Gew.-% beigemischt und die Mischung mit einem 40-µm-Drahtrakel auf Bonderstahlblech aufgetragen. Der Lack wird dreimal unter einer 80-W/cm-UV-Lampe bei einer Bandgeschwindigkeit von 12 m/min gehärtet und anschließend durch einen Abzugstest mit Tesaband 4154 auf sein Release-Verhalten geprüft.

Ein Maß für die Kratzfestigkeit der erhaltenen Lacke ist die Zugkraft, die nötig ist, um einen 500 g schweren Probenkörper, der auf drei Schrauben ruht, mit 30 cm/min über den Lack zu ziehen.

Tabelle 1

| Lack mit 1 Gew.-% von Beispiel: | Release [N] | Kratztest [N] | Mischbarkeit |
|---|---|---|---|
| Lack ohne Zusatz | 11,6 | 3,2 | |
| 1 | 6,7 | 1,9 | schlecht |
| 2 | 6,4 | 1,9 | schlecht |
| 3 | 6,4 | 2,2 | gut |
| 4 | 6,9 | 1,4 | gut |
| 5 | 7,0 | 1,8 | befriedigend |
| 6 | 1,2 | 0,8 | schlecht |
| 7 | 4,3 | 1,7 | befriedigend |

Es zeigt sich, daß die erfindungsgemäßen Substanzen dem Lack sowohl abhäsive als auch Antikratzeigenschaften vermitteln. Durch die Natur der Polyetherreste und das Verhältnis der Siliconkette zum Polyetherrest läßt sich die

Polarität des Additivs und damit auch die Mischbarkeit mit der zu verwendenden Lackformulierung der jeweiligen Polarität des Lacksystems anpassen.

## Patentansprüche

1. Organopolysiloxane mit an einer gemeinsamen Spacergruppe gebundenen Polyether- und Ester-Gruppen, wobei die Spacergruppe über eine SiC-Bindung mit dem Siloxangerüst verbunden ist, der allgemeinen Formel

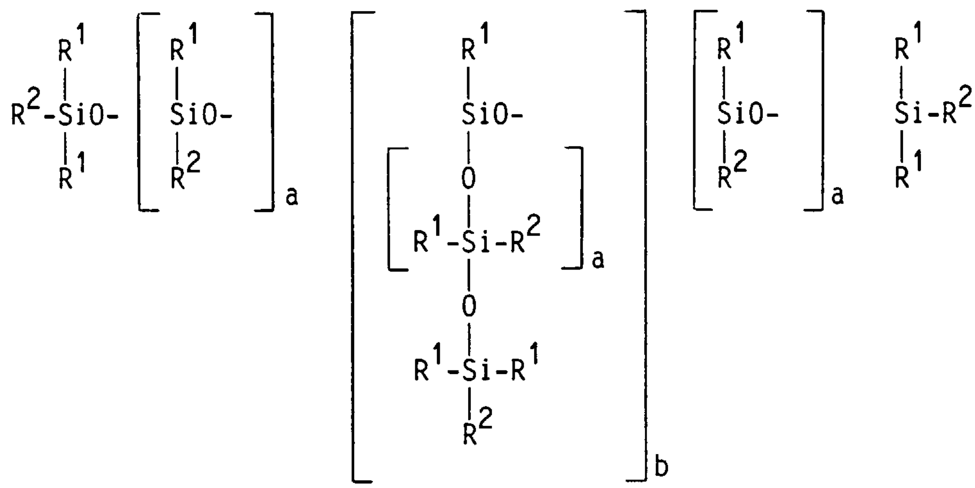

wobei
die Reste $R^1$ gleich oder verschieden sind und jeweils niedere Alkylreste mit 1 bis 4 Kohlenstoffatomen aufweisen oder Phenylreste bedeuten, jedoch mindestens 90 % der Reste $R^1$ Methylreste sind, die Reste $R^2$ zu einem Teil die Bedeutung der Reste $R^1$ haben können und die übrigen Reste $R^2$

i) zu 70 bis 100 % Reste der Formel $R^3$-$R^4$ sind, in der

$R^3$ ein zweiwertiger Kohlenwasserstoffrest, dessen Kohlenstoffkette durch ein Sauerstoffatom unterbrochen sein und/oder eine Carbonylgruppe aufweisen kann, und
$R^4$ der Rest

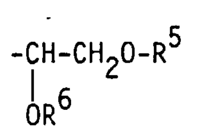 oder 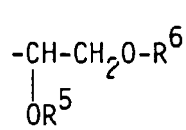

oder der Rest

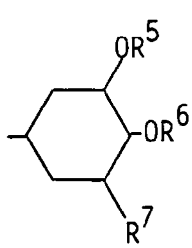 oder 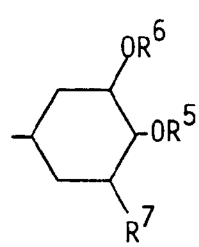

oder der Rest

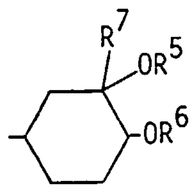 oder 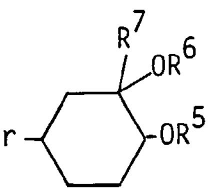

oder der Rest

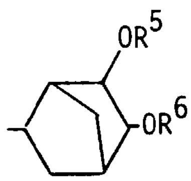 oder 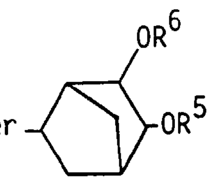

ist,

in dem $R^5$ der Acylrest einer Monocarbonsäure mit 1 bis 20 Kohlenstoffatomen,
$R^6$ ein Polyetherrest und
$R^7$ ein Wasserstoff- oder Methylrest ist, und

ii) zu 0 bis 30 % Alkylreste mit 2 bis 30 Kohlenstoffatomen und/oder Wasserstoffreste sind,

a einen Wert von 1 bis 1000 und
b einen Wert von 0 bis 10 hat,

mit der Maßgabe, daß im durchschnittlichen Molekül mindestens 1 Rest $R^2$ ein Rest der Formel $R^3$-$R^4$ ist.

**2.** Organopolysiloxane nach Anspruch 1, dadurch gekennzeichnet, daß die Reste $R^3$ aus der Gruppe

$$-(CH_2)_c-,\quad -CH_2CH(CH_3)-,\quad -(CH_2)_3OCH_2-,\quad -CH_2CH(CH_3)CH_2OCH_2-\ \text{und}\ -CH_2CH(CH_3)-C(=O)OCH_2-,$$

wobei c eine Zahl von 1 bis 6 ist, ausgewählt sind.

**3.** Organopolysiloxane nach Anspruch 1 oder 2, dadurch gekennzeichnet, daß der Rest $R^5$ der Acylrest einer ungesättigten Monocarbonsäure ist.

**4.** Organopolysiloxane nach Anspruch 3, dadurch gekennzeichnet, daß der Rest $R^5$ der Acylrest der Acryl- oder Methacrylsäure ist.

**5.** Organopolysiloxane nach einem oder mehreren der vorhergehenden Ansprüche, dadurch gekennzeichnet, daß der Rest $R^6$ ein Polyetherrest der allgemeinen Formel $-(C_nH_{2n}O-)_mH$ ist, wobei n einen durchschnittlichen Wert von 2,0 bis 4,0 und m einen durchschnittlichen Wert von 2 bis 100 hat.

**6.** Organopolysiloxane nach Anspruch 5, dadurch gekennzeichnet, daß n einen durchschnittlichen Wert von 2,0 bis 3,0 hat.

**7.** Organopolysiloxane nach einem oder mehreren der vorhergehenden Ansprüche, dadurch gekennzeichnet, daß alle Reste $R^2$ die Bedeutung des Restes $R^3$-$R^4$ haben.

**8.** Verfahren zur Herstellung der Organopolysiloxane nach Anspruch 1 bis 7, dadurch gekennzeichnet, daß man an Organopolysiloxane der allgemeinen Formel

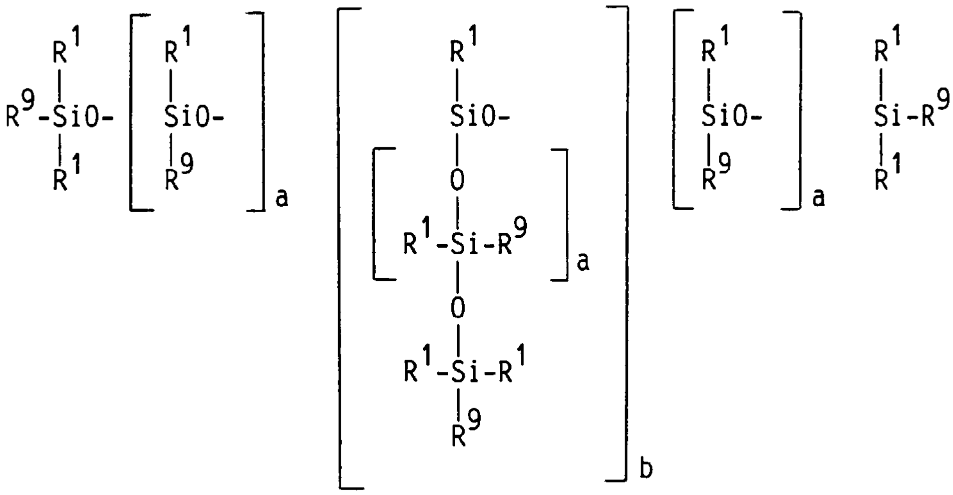

wobei

die Reste $R^1$ und die Indices a und b die bereits angegebene Bedeutung haben und
die Reste $R^9$ zu einem Teil die Bedeutung der Reste $R^1$ haben können und die übrigen Reste $R^9$

i) zu 70 bis 100 % Reste der Formel $R^3$-$R^{10}$ sind, in der

$R^3$ die bereits angegebene Bedeutung hat, und
$R^{10}$ der Rest

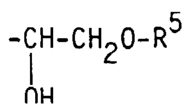 oder 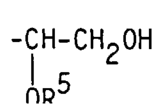

oder der Rest

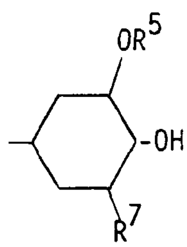 oder 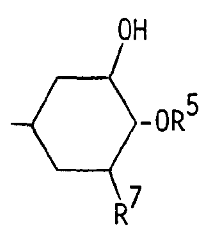

oder der Rest

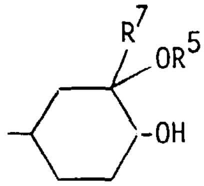 oder 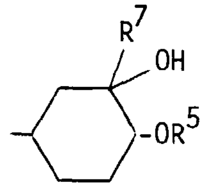

oder der Rest

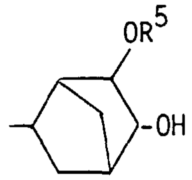 oder 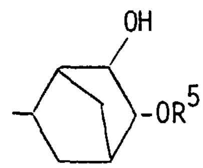

ist,
in dem $R^5$ und $R^7$ die bereits angegebene Bedeutung haben, und

ii) zu 0 bis 30 % Alkylreste mit 2 bis 30 Kohlenstoffatomen und/oder Wasserstoffreste sind,

mit der Maßgabe, daß im durchschnittlichen Molekül mindestens 1 Rest $R^2$ ein Rest der Formel $R^3$-$R^{10}$ ist, bezogen auf Reste $R^3$-$R^{10}$, 2 bis 100 Mol Alkylenoxide mit 2 bis 4 Kohlenstoffatomen einzeln oder im Gemisch in Gegenwart von an sich bekannten sauren Katalysatoren oder Komplexkatalysatoren, die die Anlagerung von Alkylenoxid an Hydroxylgruppen beschleunigen, gegebenenfalls in Gegenwart eines Lösungsmittels, anlagert.

**9.** Verfahren nach Anspruch 8, dadurch gekennzeichnet, daß man Ethylenoxid und/oder Propylenoxid einzeln, blockweise oder als Mischung unter Erhalt einer statistischen Verteilung anlagert.

**10.** Verfahren nach Anspruch 8 oder 9, dadurch gekennzeichnet, daß man als Katalysator $BF_3$ verwendet.

**11.** Verwendung der Organopolysiloxane nach einem oder mehreren der Ansprüche 1-7 als Additive für Kunststoffe, Lacke und Bindemittel.

**12.** Verwendung der Organopolysiloxane nach Anspruch 4 als strahlenhärtende Lacke und Beschichtungsmassen.

## Claims

**1.** Organopolysiloxanes having polyether groups and ester groups which are attached to a common spacer group, the spacer group being attached via a SiC bond to the siloxane framework, of the general formula

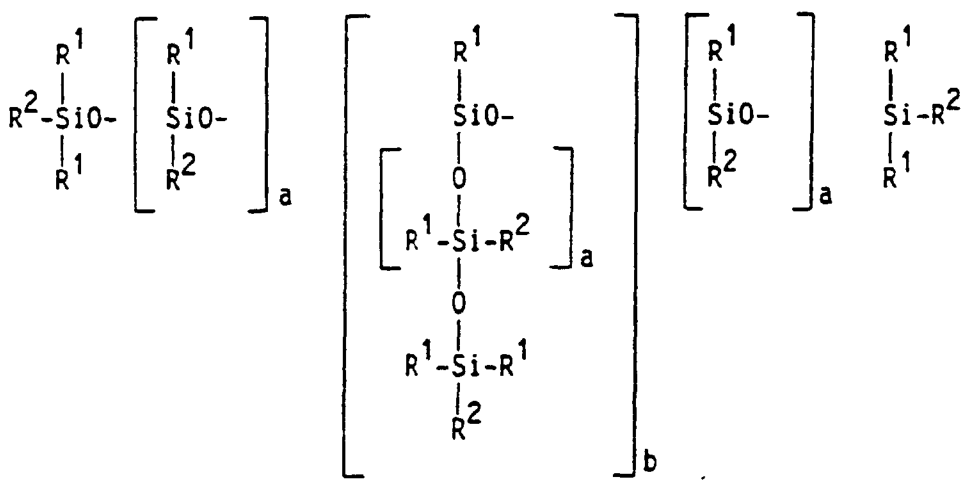

in which
the radicals $R^1$ are identical or different and are each lower alkyl radicals having 1 to 4 carbon atoms or are phenyl

radicals, but at least 90% of the radicals $R^1$ are methyl radicals, it being possible for some of the radicals $R^2$ to have the meaning of the radicals $R^1$, and, of the remaining radicals $R^2$,

i) from 70 to 100% are radicals of the formula $R^3$-$R^4$, where

$R^3$ is a divalent hydrocarbon radical whose carbon chain can be interrupted by an oxygen atom and/or can have a carbonyl group, and

$R^4$ is the radical

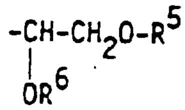

or

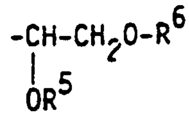

or the radical

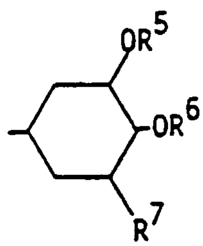

or

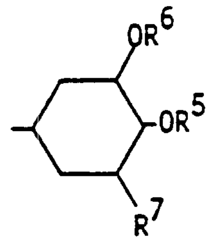

or the radical

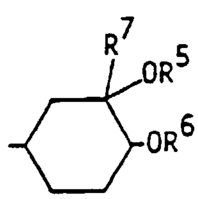

or

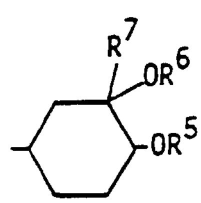

or the radical

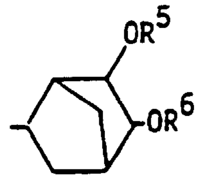 or 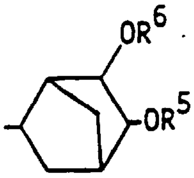 ,

where $R^5$ is the acyl radical of a monocarboxylic acid having 1 to 20 carbon atoms,
$R^6$ is a polyether radical and
$R^7$ is hydrogen or a methyl radical, and

ii) from 0 to 30% are alkyl radicals having 2 to 30 carbon atoms and/or hydrogen,

a has a value from 1 to 1000 and
b has a value from 0 to 10,

with the proviso that in the average molecule at least 1 radical $R^2$ is a radical of the formula $R^3$-$R^4$.

**2.** Organopolysiloxanes according to Claim 1, characterized in that the radicals $R^3$ are selected from the group consisting of

$-(CH_2)_c-$, 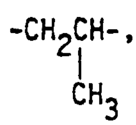, $-(CH_2)_3OCH_2-$, 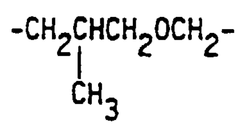

and

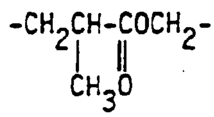,

where c is a number from 1 to 6.

**3.** Organopolysiloxanes according to Claim 1 or 2, characterized in that the radical $R^5$ is the acyl radical of an unsaturated monocarboxylic acid.

**4.** Organopolysiloxanes according to Claim 3, characterized in that the radical $R^5$ is the acyl radical of acrylic or methacrylic acid.

**5.** Organopolysiloxanes according to one or more of the preceding claims, characterized in that the radical $R^6$ is a polyether radical of the general formula $-(c_nH_{2n}O-)_mH$, where n has an average value from 2.0 to 4.0 and m has an average value from 2 to 100.

**6.** Organopolysiloxanes according to Claim 5, characterized in that n has an average value from 2.0 to 3.0.

**7.** Organopolysiloxanes according to one or more of the preceding claims, characterized in that all radicals $R^2$ have the meaning of the radical $R^3$-$R^4$.

**8.** Process for the preparation of the organopolysiloxanes according to Claim 1 to 7, characterized in that organopolysiloxanes of the general formula

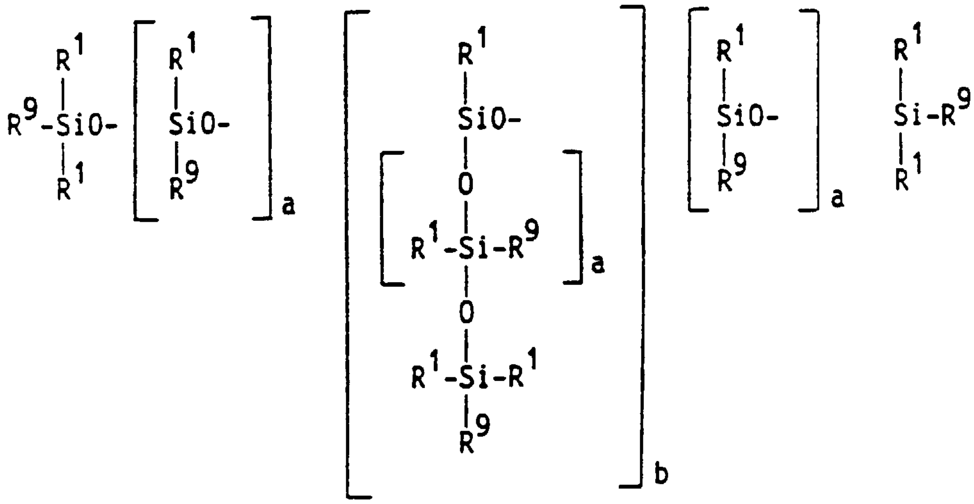

in which

the radicals $R^1$ and the indices a and b have the meaning already given and it is possible for some of the radicals $R^9$ to have the meaning of the radicals $R^1$, and, of the remaining radicals $R^9$,

i) from 70 to 100% are radicals of the formula $R^3$-$R^{10}$ where

$R^3$ has the meaning already given and
$R^{10}$ is the radical

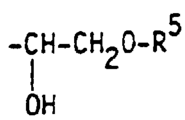
or
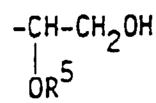

or the radical

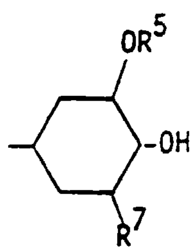
or
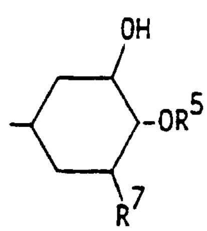

or the radical

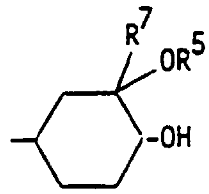 or 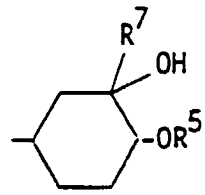

or the radical

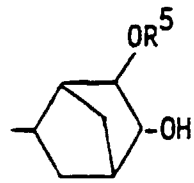 or 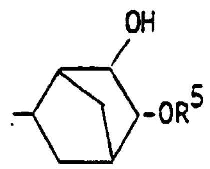 ,

where $R^5$ and $R^7$ have the meaning already given, and
ii) from 0 to 30% are alkyl radicals having 2 to 30 carbon atoms and/or hydrogen,
with the proviso that in the average molecule at least 1 radical $R^2$ is a radical of the formula $R^3$-$R^{10}$,

are subjected, if desired in the presence of a solvent, to an addition reaction with, based on radicals $R^3$-$R^{10}$, from 2 to 100 mol of alkylene oxides having 2 to 4 carbon atoms, individually or in a mixture, in the presence of complex catalysts or acidic catalysts which are known per se, which accelerate the addition of alkylene oxide onto hydroxyl groups.

**9.** Process according to Claim 8, characterized in that ethylene oxide and/or propylene oxide are added on individually, blockwise or as a mixture in order to obtain a statistical distribution.

**10.** Process according to Claim 8 or 9, characterized in that $BF_3$ is used as catalyst.

**11.** Use of the organopolysiloxanes according to one or more of Claims 1 - 7 as additives for plastics, coating materials and binders.

**12.** Use of the organopolysiloxanes according to Claim 4 as radiation-curing coating materials and coating compositions.

**Revendications**

**1.** Organopolysiloxanes contenant des groupes polyéthers et des groupes esters liés à un groupe d'espacement commun, ledit groupe d'espacement étant relié au squelette du siloxane au moyen d'une liaison SiC, répondant à la formule générale :

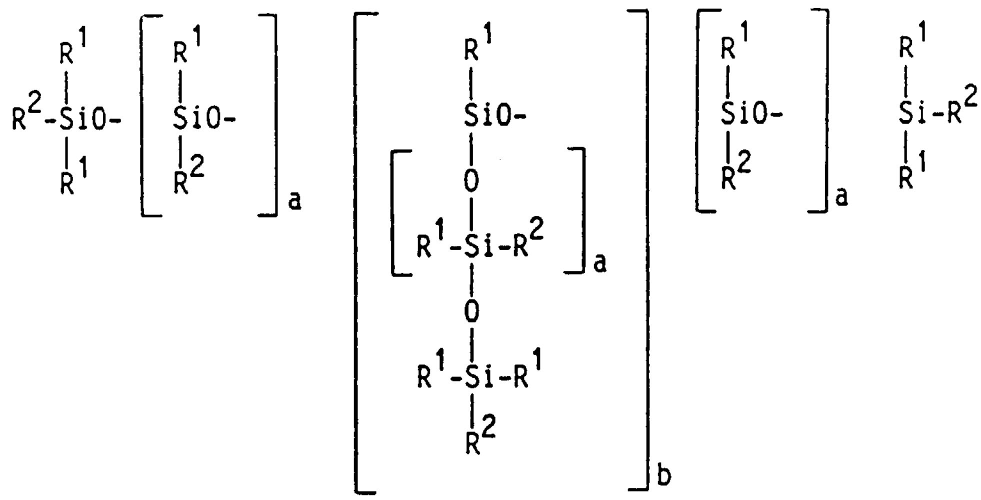

où

les restes $R^1$ sont identiques ou différents et signifient chacun un reste alkyle inférieur ayant de 1 à 4 atomes de carbone ou le reste phényle, au moins 90 % des restes $R^1$ signifiant toutefois le reste méthyle,
les restes $R^2$ peuvent avoir, pour certains d'entre eux, la signification des restes $R^1$, et

i) 70 à 100 % des autres restes $R^2$ sont des restes répondant à la formule $R^3$-$R^4$, dans laquelle

$R^3$ est un reste d'hydrocarbure bivalent dont la chaîne carbonée peut être interrompue par un atome d'oxygène et/ou peut présenter un groupe carbonyle, et
$R^4$ est le reste

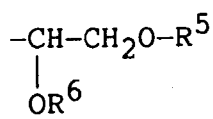 ou 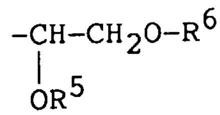

ou le reste

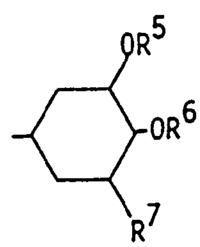 ou 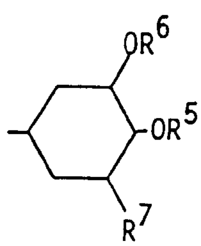

ou le reste

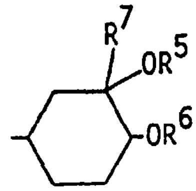 ou 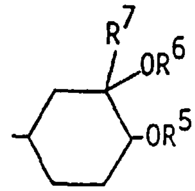

ou le reste

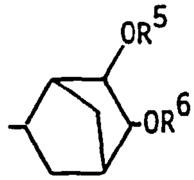

ou

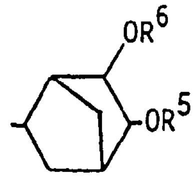

où $R^5$ est le reste acyle d'un acide monocarboxylique ayant de 1 à 20 atomes de carbone,
$R^6$ est un reste polyéther et
$R^7$ est un reste d'hydrogène ou le reste méthyle, et

ii) 0 à 30 % des autres restes $R^2$ sont des restes alkyles ayant de 2 à 30 atomes de carbone et/ou des restes d'hydrogène,

a vaut de 1 à 1 000 et
b vaut de 0 à 10,

avec la condition qu'au moins 1 reste $R^2$ soit un reste ayant la formule $R^3$-$R^4$ dans la molécule moyenne.

2. Organopolysiloxanes selon la revendication 1, caractérisés en ce que les restes $R^3$ sont choisis dans l'ensemble

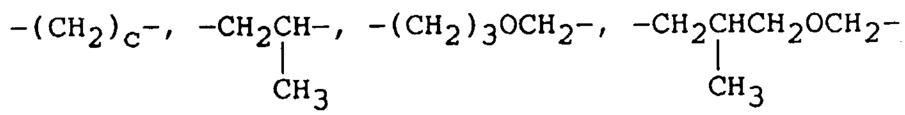

et

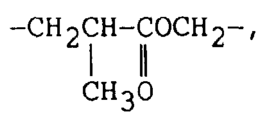

où c est un nombre de 1 à 6.

3. Organopolysiloxanes selon la revendication 1 ou 2, caractérisés en ce que le reste $R^5$ est le reste acyle d'un acide monocarboxylique insaturé.

4. Organopolysiloxanes selon la revendication 3, caractérisés en ce que le reste $R^5$ est le reste acyle de l'acide acrylique ou de l'acide méthacrylique.

5. Organopolysiloxanes selon une ou plusieurs des revendications précédentes, caractérisés en ce que le reste $R^6$ est un reste polyéther de formule générale $-(C_nH_{2n}O-)_mH$, où n a une valeur moyenne de 2,0 à 4,0, et m a une valeur moyenne de 2 à 100.

6. Organopolysiloxanes selon la revendication 5, caractérisés en ce que n a une valeur moyenne de 2,0 à 3,0.

7. Organopolysiloxanes selon une ou plusieurs des revendications précédentes, caractérisés en ce que tous les restes $R^2$ ont la signification du reste $R^3$-$R^4$.

8. Procédé de préparation des organopolysiloxanes selon les revendications 1 à 7, caractérisé en ce qu'on fixe par addition, sur des organopolysiloxanes ayant la formule générale

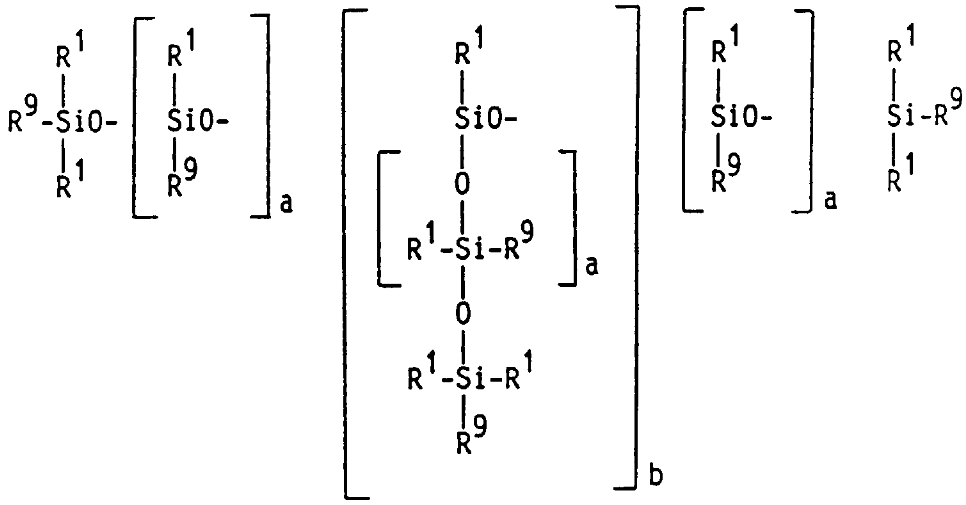

où les restes $R^1$ et les indices a et b ont les significations déjà indiquées, et les restes $R^9$ peuvent avoir, pour certains d'entre eux, la signification des restes $R^1$, et

i) 70 à 100 % des autres restes $R^9$ ont la formule $R^3$-$R^{10}$, où $R^3$ a la siqnification déjà indiquée, et

$R^{10}$ est le reste

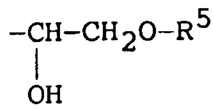 ou 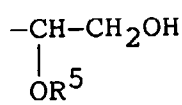

ou le reste

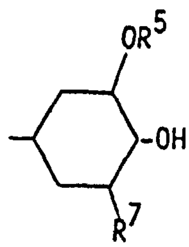

ou

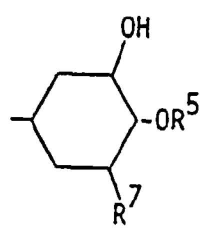

ou le reste

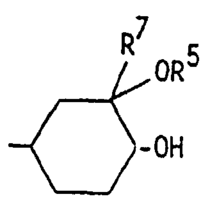

ou

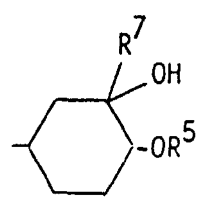

ou le reste

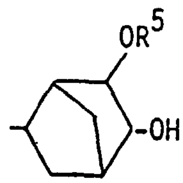

ou

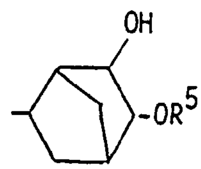

où $R^5$ et $R^7$ ont les significations déjà indiquées, et

ii) 0 à 30 % des autres restes $R^9$ sont des restes alkyles ayant de 2 à 30 atomes de carbone et/ou des restes d'hydrogène,

avec la condition qu'au moins 1 reste $R^2$ soit un reste de formule $R^3$-$R^{10}$ dans la molécule moyenne, par rapport aux restes $R^3$-$R^{10}$, 2 à 100 moles d'oxyde d'alkylène ayant de 2 à 4 atomes de carbone, individuellement ou sous la forme d'un mélange, en présence de catalyseurs ou de complexes de catalyseurs acides connus en soi qui accélèrent l'addition de l'oxyde d'alkylène sur les groupes hydroxyles, éventuellement en présence d'un solvant.

**9.** Procédé selon la revendication 8, caractérisé en ce qu'on fixe par addition de l'oxyde d'éthylène et/ou de l'oxyde de propylène, individuellement, sous la forme de séquences ou sous la forme d'un mélange, avec obtention d'une distribution statistique.

**10.** Procédé selon la revendication 8 ou 9, caractérisé en ce qu'on utilise du $BF_3$ comme catalyseur.

**11.** Utilisation des organopolysiloxanes selon une ou plusieurs des revendications 1 à 7 en tant qu'additifs pour des matières plastiques, des laques et des liants.

**12.** Utilisation des organopolysiloxanes selon la revendication 4 comme des laques et des masses de revêtement durcissant par rayonnement.